# DEMANDE DE BREVET EUROPEEN

(11) **EP 4 262 243 A1**
(43) Date de publication de la demande: **18.10.2023**
(21) Numéro de dépôt: 23167219.7
(22) Date de dépôt: 07.04.2023
(51) Int. Cl.: H04W 4/021, H04W 4/029, H04W 4/08, H04W 4/50, H04W 4/90, H04L 67/104, H04L 67/1061

(54) **RESEAU DE COMMUNICATION COMPRENANT UNE ZONE GEOGRAPHIQUE PAR GROUPE DE COMMUNICATION**

(30) Priorité: 12.04.2022 FR 2203361
(71) Demandeur: Airbus DS SLC, 78990 Elancourt (FR)
(72) Inventeur: Paterour, Olivier, 78990 Elancourt (FR); Piroard, François, 78990 Elancourt (FR)
(74) Mandataire: Cabinet Camus Lebkiri

(57) **Abrégé**

Un aspect de l'invention concerne un réseau de communication selon le standard 3GPP MCS « 3rd Génération Partnership Project Mission Critical Services » comprenant :
- Au moins un premier groupe de communication,
- Une pluralité de dispositifs utilisateurs ayant chacun connaissance du premier groupe de communication,
- Au moins un serveur de gestion du premier groupe de communication gérant le premier groupe de communication via un document de groupe spécifique au premier groupe de communication, le serveur de gestion du premier groupe de communication permettant à chaque dispositif utilisateur de la pluralité de dispositifs utilisateurs de communiquer dans le premier groupe de communication, le document de groupe global de communication comprenant au moins un paramètre géographique de groupe, le paramètre géographique de groupe définissant une zone géographique dans laquelle le dispositif utilisateur de la pluralité de dispositifs utilisateurs est affilié au premier groupe de communication.

## Description

### DOMAINE TECHNIQUE DE L'INVENTION

Le domaine technique de l'invention est celui des réseaux de communication et plus particulièrement celui des réseaux de communication selon le standard 3GPP MCS.

La présente invention concerne un réseau de communication et plus particulièrement un réseau de communication comprenant un paramètre géographique géré par des serveurs au niveau des groupes de communication.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} mettent en oeuvre des serveurs qui permettent d'annoncer la disponibilité d'un ou plusieurs services à des équipements utilisateurs lorsqu'ils sont situés dans une certaine zone, ou lorsqu'ils entrent dans une certaine zone. Ces annonces localisées sont réalisées via la couverture radio de stations de base du réseau : lorsque l'on souhaite annoncer qu'un service est disponible à un utilisateur situé à une certaine localisation, il suffit d'envoyer un message de signalisation à une station de base couvrant cette localisation, qui le diffuse aux équipements utilisateurs dans la zone radio qu'elle couvre. Ces communications utilisent un canal radio de contrôle permettant de faire de la signalisation radio.

Un équipement utilisateur recevant un message de signalisation dispose d'une intelligence embarquée et peut alors décider s'il est capable d'utiliser le service annoncé et/ou s'il y est autorisé grâce à des paramètres joints au message de signalisation. Il est ainsi par exemple possible de limiter l'accès aux communications d'un groupe à une zone géographique. L'utilisateur devra préalablement s'être attaché (TETRA^{®}) ou affilié (P25^{®}) au groupe considéré, indépendamment de sa position géographique. Il n'est alors pas notifié de la mise en oeuvre du groupe, mais de son activation, par exemple par réception de media sur ce groupe.

Ces réseaux évoluent vers une prise en charge d'échanges en large bande. Le standard 3GPP régissant les réseaux mobiles de type « GSM » selon la dénomination anglo-saxonne « Global System for Mobile Communications » et plus particulièrement dans les déploiements faisant appel à des services de communications critiques définis par le 3GPP appelés « MCS » selon la dénomination anglo-saxonne « Mission Critical Services » permet ces échanges sécurisés en large bande.

On entend par « réseau de communication selon le standard 3GPP MCS », un réseau de communication compatible avec le standard 3GPP MCS et plus particulièrement avec la version actuelle du 3GPP qui est la version 17, avec les versions précédentes à partir de la version 13 et avec les versions suivantes intégrant toutes les caractéristiques de l'invention.

Dans le standard 3GPP MCS, les services de communication suivants sont définis :
- MCPTT, de l'anglais « Mission Critical Push To Talk » pour « Appuyer Pour Parler en Mission Critique » en français, qui permet de réaliser des communications voix,
- MCVideo, qui permet de réaliser des communications vidéo,
- MCData, qui comprend trois sous-services :
   - SDS de l'anglais « Short Data Service » pour « Service de données courtes » en français et
   - FD de l'anglais « File Distribution » pour « Distribution de fichier » en français,
   - IPCon de l'anglais « IP Connectivity » pour « Connectivité IP » en français.

Par la suite, par «entité MCX », on fera référence à une entité du réseau mettant en oeuvre tout service de communication du 3GPP MCS, c'est-à-dire MCPTT, MCData ou MCVideo.

Dans le standard 3GPP MCS, des annonces dépendant d'un paramètre géographique sont possibles. Ce paramètre géographique est défini pour un utilisateur d'une entité cliente du réseau et est compris dans un document relatif à l'utilisateur, stocké par une base de données utilisateurs du réseau et récupéré par chaque serveur du réseau gérant les communications liées à cet utilisateur. Dans le cas d'une affiliation à un groupe en fonction de la position du dispositif utilisateur, c'est le dispositif utilisateur qui prend la décision de s'affilier en connaissant son positionnement.

Dans l'objectif d'autoriser l'affiliation d'un utilisateur à un groupe seulement dans un périmètre géographique donné, par exemple suite à un appel de détresse, il peut exister un processus au niveau des outils d'administration, qui détermine les membres d'un groupe et qui modifie les paramètres du profil utilisateur de chaque membre du groupe, membre par membre. Un tel processus est lourd et long, à mettre en place et à utiliser. De plus, un tel processus ne fonctionne que dans les cas où l'outil d'administration a connaissance de tous les membres du groupe. En effet, un groupe est géré par un serveur MCX, et une modification du paramètre géographique est imposée par l'outil d'administration du réseau au serveur MCX qui gère le groupe, la modification du paramètre géographique étant définie par l'outil d'administration pour chaque utilisateur du groupe devant voir son paramètre géographique modifié au niveau du profil utilisateur connu du serveur MCX. L'outil d'administration doit alors envoyer au serveur MCX gérant le groupe une liste de chaque membre devant voir son paramètre géographique dans son profil utilisateur modifié par le serveur MCX.

Un serveur MCX gère un groupe de communication en mettant en oeuvre des fonctions de gestion de ce groupe définies par le standard 3GPP MCS, et comprend au moins un profil utilisateur de chaque utilisateur membre du groupe et au moins un document de groupe. Un tel serveur MCX est appelé serveur GMS, de l'anglais « Group Management Server » pour « Serveur de Gestion de Groupe ». Un document de groupe est défini par la spécification "Group XDM Spécification" de l'Open Mobile Alliance OMA-TS-XDM_Group version 1.1.1 du 24 Janvier 2017. Un profil utilisateur est géré dans le serveur CMS, de l'anglais « Configuration Management Server » pour « Serveur de gestion de configuration » en français. Un profil utilisateur est géré au travers de plusieurs documents différents comme décrit dans la spécification technique du 3GPP MCS TS 24.484.

Le standard 3GPP MCS définit des regroupements de groupes, c'est-à-dire la possibilité de regrouper plusieurs groupes de communications en un groupe « regroupé » ou « global », temporairement. Pour cela, un serveur MCX est défini comme gérant ce regroupement de groupes parmi les différents serveur MCX gérant déjà chaque groupe constituant le regroupement. Il est appelé « Contrôleur ». Les autres serveurs MCX gérant un groupe constituant le regroupement mais ne gérant pas le regroupement de groupe est appelé « Non-contrôleur ».

Pour autoriser l'affiliation d'un utilisateur à un regroupement de groupes dans un périmètre géographique donné, l'utilisation de la solution précédente n'est pas possible car la zone géographique est définie par utilisateur et il n'existe pas de mécanisme pour propager la mise à jour du paramètre géographique de chaque utilisateur du regroupement depuis le serveur contrôleur vers les autres serveurs non-contrôleurs. L'outil d'administration n'a pas connaissance de tous les membres du regroupement ni du serveur auquel ils sont rattachés. Il n'est alors pas possible de modifier la zone géographique comme un paramètre du regroupement de groupe.

De plus, la mise à jour du paramètre géographique existant dans le profil utilisateur nécessite une mise à jour du profil sur tous les clients, ce qui prend un certain temps, surtout si la densité de clients est forte sur certaines cellules. En effet, une mise à jour sur le document géré par le serveur de gestion sera propagée vers chaque client puisque chaque client s'est abonné au préalable, via un message dit de « subscribe » afin de recevoir toute modification effectuée ultérieurement sur le document, via un message de notification dit de « notify ». Cela crée aussi des risques de désynchronisation entre le serveur et les clients et entre les clients.

Il existe ainsi un besoin, dans un réseau selon le standard 3GPP MCS, de pouvoir autoriser l'affiliation d'une entité cliente MCX à un groupe et ses groupes constituants, connu de toutes les entités clientes MCX mais dont l'affiliation n'est autorisée que sur un périmètre géographique défini dans ce groupe et seulement si l'entité cliente MCX se situe dans ce périmètre géographique, de manière simple, fiable et rapide.

### RESUME DE L'INVENTION

L'invention offre une solution aux problèmes évoqués précédemment, en proposant un paramètre géographique au niveau du document de groupe dans un réseau selon le standard 3GPP MCS, mis à jour statiquement ou dynamiquement.

Un aspect de l'invention concerne un réseau de communication selon le standard 3GPP MCS « 3rd Génération Partnership Project Mission Critical Services » comprenant :
- Au moins un premier groupe de communication,
- Une pluralité de dispositifs utilisateurs ayant chacun connaissance du premier groupe de communication,
- Au moins un serveur de gestion du premier groupe de communication gérant le premier groupe de communication via un document de groupe spécifique au premier groupe de communication, le serveur de gestion du premier groupe de communication permettant à chaque dispositif utilisateur de la pluralité de dispositifs utilisateurs de communiquer dans le premier groupe de communication, le document de groupe global de communication comprenant au moins un paramètre géographique de groupe, le paramètre géographique de groupe définissant une zone géographique dans laquelle le dispositif utilisateur de la pluralité de dispositifs utilisateurs est affilié au premier groupe de communication.

Grâce à l'invention, il est possible de gérer l'affiliation de dispositifs utilisateurs à des groupes en fonction d'un paramètre géographique au niveau des groupes. Ainsi, dans un exemple de mise en oeuvre de l'invention décrit dans ce document, ce sont les serveurs de gestion de groupes de communication qui prennent les décisions concernant l'affiliation des dispositifs utilisateurs aux groupes et non les dispositifs utilisateurs eux-mêmes, au contraire de l'état de l'art. Il est aussi, dans l'invention, plus simple de propager un unique paramètre géographique car celui-ci est attribué au groupe et non à un utilisateur. Un serveur de gestion du groupe peut ainsi, en sachant quels groupes sont regroupés en un groupe global, propager ce paramètre vers les autres serveurs gérant ces groupes regroupés. Chaque serveur a alors une fonction supplémentaire, celle de surveiller si ce critère est rempli ou non pour les utilisateurs qu'il gère et pour le groupe qu'il gère. Ce changement de paradigme dans la gestion des affiliations en fonction de paramètres géographiques permet de résoudre les problèmes de l'état de l'art, de manière simple.

L'invention peut alors permettre de définir une zone géographique autour d'un incident impliquant la coordination de forces de secours et de sécurité et d'affilier automatiquement les dispositifs utilisateurs dans cette zone même s'ils appartiennent à des groupes différents, en initiant un regroupement de groupe, une propagation du paramètre géographique vers les serveurs gérant les groupes regroupés, et en affiliant les utilisateurs présents dans la zone définie par le paramètre géographique.

L'invention a l'avantage que le paramètre géographique est unique pour un groupe de communication, et qu'il ne nécessite donc pas de réaliser de distinction entre dispositifs utilisateurs. De plus, les dispositifs utilisateurs n'ont pas besoin d'avoir la connaissance de ce périmètre géographique pour réaliser les fonctionnalités classiques liées à la localisation, au contraire de l'état de l'art, améliorant par la même occasion la sécurité du réseau.

Outre les caractéristiques qui viennent d'être évoquées dans le paragraphe précédent, le réseau de communication selon un aspect de l'invention peut présenter une ou plusieurs caractéristiques complémentaires parmi les suivantes, considérées individuellement ou selon toutes les combinaisons techniquement possibles :
- le premier groupe de communication est un groupe global de communication regroupant au moins un deuxième groupe de communication et au moins un troisième groupe de communication.
- le réseau de communication au moins un deuxième serveur de gestion et un troisième serveur de gestion, le deuxième serveur de gestion gérant le deuxième groupe de communication, le troisième serveur de gestion gérant le troisième groupe de communication, le premier serveur de gestion étant configuré pour propager le paramètre géographique du document de groupe au deuxième serveur de gestion et au troisième serveur de gestion lorsque le paramètre géographique est modifié, lorsque le paramètre géographique est mis en place et/ou lorsque le premier groupe de communication est créé par un regroupement du deuxième groupe de communication et du troisième groupe de communication.
- le serveur de gestion du premier groupe de communication est en outre configuré pour :
   - déterminer qu'au moins un premier dispositif utilisateur parmi la pluralité de dispositifs utilisateurs est entré dans la zone géographique définie par le paramètre géographique,
   - initier l'affiliation du premier dispositif utilisateur au premier groupe de communication.
- le serveur de gestion du premier groupe de communication est en outre configuré pour recevoir, de chaque dispositif utilisateur de la pluralité de dispositifs utilisateurs, la position du dispositif utilisateur périodiquement et dans lequel le serveur de gestion du premier groupe de communication utilise la position du dispositif utilisateur reçue pour déterminer si le dispositif utilisateur est entré dans la zone géographique définie par le paramètre géographique.
- chaque dispositif utilisateur de la pluralité de dispositifs utilisateurs comprend un module de positionnement et est configuré pour, périodiquement :
   - déterminer sa position en utilisant son module de positionnement,
   - transmettre sa position au serveur de gestion du premier groupe de communication.
- le paramètre géographique du document de groupe du premier groupe de communication est défini par configuration du réseau de communication.
- le paramètre géographique du document de groupe du premier groupe de communication est mis à jour dynamiquement suite à l'émission d'une alerte par au moins un dispositif utilisateur à destination du serveur de gestion du premier groupe de communication, la zone géographique définie par le paramètre géographique étant alors centrée au niveau du dispositif utilisateur ayant émis l'alerte, l'alerte émise comprenant la position du dispositif utilisateur.
- la zone géographique définie par le paramètre géographique est polygonale ou ellipsoïdale.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.

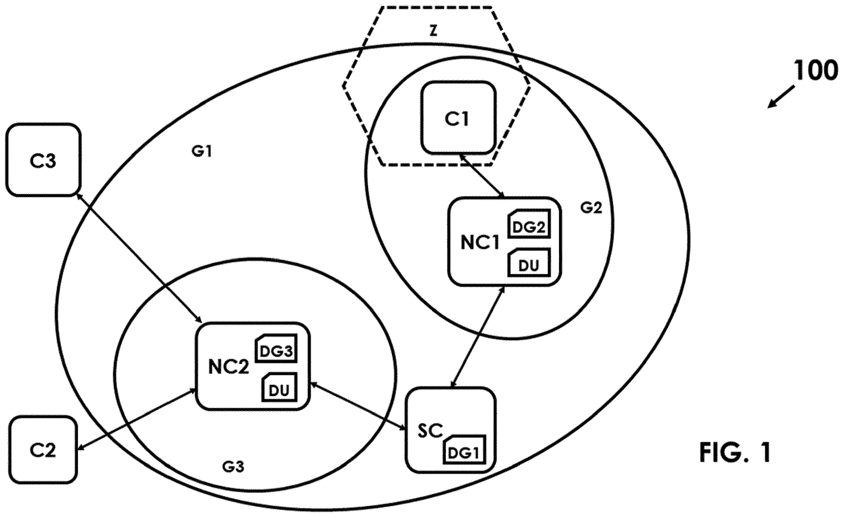

- La figure 1 montre une représentation schématique d'un réseau de communication selon l'invention.

### DESCRIPTION DETAILLEE

Sauf précision contraire, un même élément apparaissant sur des figures différentes présente une référence unique.

[Fig. 1] La figure 1 montre une représentation schématique d'un réseau de communication selon l'invention. Le réseau de communication selon l'invention est un réseau selon le standard 3GPP MCS.

On entend par « réseau de communication », un réseau permettant d'accéder à des services de communication, c'est-à-dire à des services liés à de la communication, par exemple l'accès à l'audio, à la vidéo ou encore à une messagerie avec fichiers pour interagir avec un ou plusieurs équipements utilisateurs. Les services de communication permettent d'établir des communications entre dispositifs utilisateurs ou des communications de groupe entre les dispositifs utilisateurs affiliés à un même groupe de communication.

On entend par « groupe de communication » un groupe virtuel regroupant plusieurs dispositifs utilisateurs pouvant interagir entre eux une fois authentifiés à un serveur de gestion de groupe du réseau de communication permettant l'accès au groupe de communication.

Le réseau de communication 100 représenté à la Figure 1 comprend une pluralité de groupes de communication. L'invention couvre aussi le cas particulier dans lequel le réseau de communication 100 ne comprend qu'un groupe de communication.

Le réseau de communication 100 comprend un premier groupe de communication G1. Ce premier groupe de communication G1 est un groupe « global » regroupant deux groupes de communication préexistants. Le groupe global G1 regroupe un deuxième groupe de communication G2 et un troisième groupe de communication G3.

Le réseau de communication 100 peut être fixe, par exemple un réseau de communication couvrant une entreprise, ou mobile, par exemple tactique, c'est-à-dire utilisé dans le cas d'une mission des forces spéciales.

Un dispositif utilisateur C1, C2 et C3, aussi appelé équipement utilisateur (UE) ou entité cliente, est par exemple un smartphone, une tablette, un ordinateur portable ou tout autre dispositif permettant de communiquer au sein d'un réseau. Un dispositif utilisateur comprend au moins une mémoire et au moins un processeur, la mémoire comprenant des instructions qui, lorsqu'elles sont exécutées par le processeur, conduisent l'équipement utilisateur à mettre en oeuvre les actions qui lui sont attribuées dans la suite de la description. Préférentiellement, les dispositifs utilisateur comprennent un module d'affichage. De la même manière, les différents serveurs, comprenant les serveurs contrôleurs et non-contrôleurs et les serveurs de gestion de groupes de communication, sont des dispositifs comprenant au moins une mémoire et au moins un processeur, la mémoire comprenant des instructions qui, lorsqu'elles sont exécutées par le processeur, conduisent le serveur à mettre en oeuvre les actions qui lui sont attribuées dans la suite de la description. Les serveurs et les dispositifs utilisateurs sont reliés entre eux et forment le réseau 100 tel que celui représenté à la Figure 1, ce réseau mettant en oeuvre des communications filaires, sans fil, ou toute combinaison.

Le réseau 100 selon l'invention comprend au moins un serveur de gestion de groupe de communication. Un tel serveur de gestion de groupe de communication est aussi appelé « GMS » dans le standard 3GPP MCS, de l'anglais « Group Management Server ». Chaque serveur de gestion de groupe de communication comprend un document de groupe DG et un document utilisateur DU pour chaque dispositif utilisateur qu'il gère. Le document de groupe DG est tel que celui défini dans l'état de l'art, et le document utilisateur DU est un profil utilisateur tel que défini dans l'état de l'art. D'autres types de serveurs, définis par le standard 3GPP MCS et nécessaires à son implémentation, ne sont pas représentés pour plus de clarté.

Dans l'invention, au contraire de l'état de l'art, le paramètre géographique n'est pas mis en oeuvre au niveau des dispositifs utilisateurs, c'est-à-dire au sein des documents utilisateur DU, mais au niveau des groupes de communication, donc au sein des documents de groupe DG.

Le paramètre géographique comprend une information de forme de zone géographique Z, une information de centre de la zone géographique Z et une information d'étendue de la zone géographique Z. La zone géographique Z est préférentiellement de forme polygonale ou ellipsoïdale, mais peut être de toute autre forme. Une information de centre de la zone géographique Z est par exemple de type coordonnées GPS (de l'anglais « Global Positioning System » pour « Système de Positionnement Global » en français). Une information d'étendue de la zone géographique Z est par exemple une distance ou une aire exprimée par une valeur. Le paramètre géographique peut être ajouté à un document de groupe en tant qu'élément, comme défini dans le standard 3GPP MCS. Un tel élément de paramètre géographique peut par exemple prendre la forme suivante :

Un élément <GeoPerimeter> comprenant :
- Au moins un élément <LocationCriteria> comprenant :
   - un élément <PolygonArea> ou un élément <EllipsoidArcArea>

Un paramètre géographique est associé à au moins un groupe de communication, définissant une zone géographique Z dans laquelle un dispositif utilisateurs de la pluralité de dispositifs utilisateurs du réseau 100 peut réaliser une action liée au groupe de communication associé au paramètre géographique. Dans la suite de la description, on se concentrera sur la description de l'affiliation de dispositifs utilisateurs à un groupe de communication lorsqu'ils sont dans la zone géographique Z, mais l'invention couvre toute action du dispositif utilisateur entrant ou situé dans la zone géographique Z liée au groupe de communication associé au paramètre géographique définissant la zone géographique Z.

En ajoutant le paramètre géographique au niveau des groupes de communication, le serveur de gestion en charge d'un regroupement de groupes est capable de propager le paramètre géographique aux autres serveurs de gestion des groupes de communications regroupés, pour qu'il soit mis en oeuvre dans leurs propres documents de groupe DG. Par exemple, comme représenté à la Figure 1, le serveur contrôleur SC gère le groupe global G1 et il comprend un document de groupe DG1. Un serveur non-contrôleur NC1 gère le deuxième groupe de communication G2 et comprend un document de groupe DG2 du groupe de communication G2 et un serveur non-contrôleur NC2 gère le troisième groupe de communication G3 et comprend un document de groupe DG3 du groupe de communication G3. Dans une variante, le serveur contrôleur SC est confondu avec l'un des serveurs non-contrôleurs NC1 ou NC2.

Le paramètre géographique peut être implémenté une première fois au sein des documents de groupes, puis peut être mis à jour. La première implémentation du paramètre géographique peut être manuelle, c'est-à-dire par configuration du serveur comprenant ce document de groupe, ou elle peut être automatique, par exemple par transmission du paramètre géographique d'un outil d'administration du réseau 100 ou d'un autre serveur vers le serveur comprenant le document de groupe, ou par exemple par génération, par le serveur ou par un autre serveur, du paramètre géographique, par exemple en utilisant un procédé de génération de paramètre géographique dont il stocke en mémoire les étapes. Lors de la première implémentation du paramètre géographique au sein d'un des serveurs de gestion de groupe de communication SC, NC1 ou NC2, ou lors de la mise à jour du paramètre géographique, le serveur implémentant pour la première fois le paramètre géographique ou le mettant à jour est configuré pour propager le paramètre géographique à d'autres serveurs si le groupe de communication qui lui est associé est un regroupement de groupes, constitué par plusieurs groupes de communication regroupés. C'est le cas du groupe global G1.

Une première implémentation ou une mise à jour du paramètre géographique dans le document de groupe par un serveur de gestion peut être initiée par un appel de détresse. Dans le cas d'un appel de détresse, l'annonce d'appel de détresse émise par un dispositif utilisateur peut comprendre la localisation de l'équipement utilisateur à l'origine de l'appel de détresse. Cela permet de localiser l'équipement utilisateur à l'origine de l'appel de détresse et donc de localiser l'évènement. Le centre de la zone géographique Z est alors défini par la position du dispositif utilisateur émettant l'appel de détresse, et la taille et la forme de la zone peuvent être par exemple définies par configuration, par exemple comprise dans le serveur de gestion ou dans une base de données du réseau 100 accessible par le serveur de gestion. On entend par « mise à jour » du paramètre géographique une modification soit de la taille de la zone géographique Z, soit du centre de la zone géographique Z, soit de la forme de la zone géographique Z. Cette modification peut être à l'origine d'un opérateur du réseau 100, d'un serveur du réseau 100, ou d'un dispositif utilisateur du réseau 100. Une mise à jour peut aussi comprendre la création d'un paramètre géographique dans le document de groupe.

Le serveur contrôleur SC, recevant le paramètre géographique ou lors d'une mise à jour du paramètre géographique associé au groupe G1, est alors configuré pour propager le paramètre géographique aux autres serveurs gérant les groupes de communications regroupés dans le groupe global GA. Il est alors configuré pour transmettre le paramètre géographique au serveur de gestion NC1 du deuxième groupe de communication G2 et au serveur de gestion NC2 du troisième groupe de communication G3. A réception de ce nouveau paramètre géographique ou de ce paramètre géographique mis à jour, les serveurs de gestion respectivement ajoutent le paramètre géographique au document de groupe DG ou mettent à jour le paramètre géographique compris dans le document de groupe DG. La propagation peut aussi avoir lieu lorsque le regroupement des groupes G2 et G3 en le groupe global G1 a lieu, permettant de transmettre le paramètre géographique du groupe global G1 créé aux groupes de communication G2 et G3 existants. Cela peut avoir lieu lorsqu'une zone géographique Z est associée au regroupement de groupes. Le paramètre géographique est alors transmis avec la commande de regroupement, envoyée par le serveur de gestion SC du groupe de communication G1 aux serveurs de gestion NC1 et NC2 des groupes de communication G2 et G3. De plus, l'invention est compatible avec les deux modes de regroupement prévus par le standard 3GPP MCS :
- Si la méthode de regroupement utilisée est le "regroup based on pre-configured group", c'est-à-dire un regroupement basé sur un groupe de communication préconfiguré, alors la modification peut être réalisée :
   - soit au niveau du document de groupe du groupe préconfiguré dans le serveur de gestion du groupe préconfiguré,
   - soit dans les paramètres du regroupement lui-même, c'est-à-dire dans les données dynamiques du serveur contrôleur du groupe préconfiguré, et transmise aux serveurs contrôleurs des groupes constituant le regroupement pour qu'ils déterminent lesquels de leurs membres sont effectivement dans le périmètre défini par la zone géographique Z, par un SIP MESSAGE de création ou de mise à jour du regroupement, auquel aura été ajouté le périmètre géographique du regroupement qui n'existe pas dans l'art antérieur.
- Si la méthode utilisée est la création d'un nouveau groupe dans le serveur de gestion du regroupement, le nouveau groupe comprenant des groupes constituants, alors il est aussi nécessaire d'ajouter le paramètre géographique au message de notification de regroupement, du serveur de gestion du regroupement vers les serveurs de gestion des groupes constituants et des serveurs de gestion vers les serveurs MCX. Cette seconde méthode permet de continuer à utiliser le groupe préconfiguré comme base à d'autres regroupements qui n'utilisent pas de périmètre ou utilisent un périmètre différent.

Dans les deux cas, le paramètre géographique est ajouté dans le document de groupe et/ou dans la commande de regroupement envoyée vers les serveurs de gestion des groupes constituant le groupe de regroupement.

Les dispositifs utilisateurs C2 et C3 ne sont affiliés à aucun groupe de communication représenté à la Figure 1, car ils ne sont pas dans la zone géographique Z définie par le paramètre géographique du document de groupe DG1 du groupe G1, et donc défini par propagation par le paramètre géographique du document de groupe DG2 groupe G2 et du document de groupe DG3 du groupe G3.

Un dispositif utilisateur C1 du réseau de communication 100 est affilié au deuxième groupe de communication G2. En effet, celui-ci est dans la zone géographique Z définie par le paramètre géographique du document de groupe DG2 du deuxième groupe de communication G2. Le dispositif utilisateur C1 du réseau 100 est donc aussi affilié au groupe global G car le groupe G2 est regroupé avec le groupe G3 dans le groupe global G1.

Le dispositif utilisateur C1 est affilié au deuxième groupe de communication G2 car il est entré dans la zone géographique Z définie par le paramètre géographique du document de groupe DG2 du deuxième groupe de communication G2, ou car il était dans cette zone lors de la mise en oeuvre du paramètre géographique. Le serveur de gestion NC2 du groupe de communication G2, surveillant les entrées et sorties de cette zone par les dispositifs utilisateurs qu'il gère, a alors alerté le dispositif utilisateur C1 sur le fait qu'il devait s'affilier ou qu'il pouvait s'affilier au groupe de communication G2. La nécessité de s'affilier ou la possibilité de s'affilier est définie par configuration en association avec le paramètre géographique dans le document de groupe DG2.

La surveillance de l'entrée ou de la sortie de dispositifs utilisateurs par les serveurs de gestion dans la zone géographique Z ne fait pas partie de la présente invention. Le serveur de gestion peut connaître la position du dispositif utilisateur, par exemple si le dispositif utilisateur est configuré pour faire remonter périodiquement sa position au serveur de gestion de localisation qui le gère. La position peut être récupérée par le dispositif utilisateur et ajoutée à un message périodique à destination du serveur de gestion en utilisant un module de positionnement et/ou d'assistance au positionnement qu'il comprend, par exemple un module GPS ou un module sans-fil tel qu'un module Wi-Fi^{®}.

L'alerte, par le serveur de gestion NC1 du groupe de communication G2 vers le dispositif utilisateur C1, est par exemple un message de type SIP MESSAGE. SIP est un protocole d'initiation de session.

Tous les dispositifs utilisateurs ont connaissance des groupes de communication auxquels ils sont susceptibles d'être affiliés en entrant dans la zone géographique Z. Pour avoir connaissance de ce ou ces groupes de communication, ce ou ces groupes de communication sont configurés à l'avance pour l'ensemble des utilisateurs susceptibles de pouvoir bénéficier des services de communication qu'ils offrent. L'utilisateur obtient préalablement à l'utilisation de l'invention la liste, dans son profil utilisateur, de tous les groupes dont l'utilisateur est membre, et charge ensuite les documents de groupe correspondants.

L'affiliation du dispositif utilisateur C1 au groupe de communication G2 peut être une affiliation implicite comme le permet le standard 3GPP MCS, c'est-à-dire en étant affilié de manière contrainte par le système régissant le réseau 100. L'affiliation peut aussi être réalisée à la discrétion d'un utilisateur du dispositif utilisateur C1, par exemple par affichage sur un écran du dispositif utilisateur C1.

Le dispositif utilisateur peut aussi décider de s'affilier ou non au groupe de communication indiqué dans l'information reçue, lorsque l'affiliation ne lui est pas contrainte et qu'il n'est pas configuré pour interroger son utilisateur via un écran, en mettant en oeuvre, par exemple par un processeur du dispositif utilisateur, un procédé enregistré en mémoire du dispositif utilisateur.

Le paramètre géographique permet de créer une zone de service. Par exemple, lorsqu'un dispositif utilisateur entre dans cette zone, son utilisateur peut être notifié d'un service disponible dans cette zone, par exemple une communication de groupe.

L'invention couvre aussi les actions contraires, c'est-à-dire la désaffiliation d'un dispositif utilisateur C1 sortant de la zone géographique Z. La désaffiliation est réalisée de la même manière que l'affiliation, à l'exception que le dispositif utilisateur n'a pas le choix de se désaffilier ou non. La désaffiliation est imposée par le serveur surveillant les entrées et sorties de la zone géographique Z et doit alors être mise en oeuvre par le dispositif utilisateur sortant de la zone géographique Z.

Un serveur de gestion ou tous les serveurs de gestion du réseau peu(ven)t être configuré(s) pour que, si le paramètre géographique n'est pas renseigné dans un document de groupe d'un groupe de communication, ou si le document de groupe indique une zone géographique Z "nulle", le groupe de communication ne soit autorisé nulle part, donc aucun équipement utilisateur ne peut s'y affilier tant que le paramètre géographique n'a pas été mis à jour. Dans une variante, un serveur de gestion ou tous les serveurs de gestion du réseau peu(ven)t être configuré(s) pour que, si le paramètre géographique n'est pas renseigné dans un document de groupe d'un groupe de communication, ou si le document de groupe indique une zone géographique Z "nulle", le groupe de communication soit autorisé partout, donc tout équipement utilisateur peut s'y affilier à tout moment.

## Revendications

1. Réseau de communication (100) selon le standard 3GPP MCS « 3rd Génération Partnership Project Mission Critical Services » comprenant :
- Au moins un premier groupe de communication,
- Une pluralité de dispositifs utilisateurs ayant chacun connaissance du premier groupe de communication,
- Au moins un serveur de gestion du premier groupe de communication gérant le premier groupe de communication via un document de groupe spécifique au premier groupe de communication, le serveur de gestion du premier groupe de communication permettant à chaque dispositif utilisateur de la pluralité de dispositifs utilisateurs de communiquer dans le premier groupe de communication, le document de groupe global de communication comprenant au moins un paramètre géographique de groupe, le paramètre géographique de groupe définissant une zone géographique dans laquelle le dispositif utilisateur de la pluralité de dispositifs utilisateurs est affilié au premier groupe de communication.

2. Réseau de communication (100) selon la revendication précédente dans lequel le premier groupe de communication est un groupe global de communication regroupant au moins un deuxième groupe de communication et au moins un troisième groupe de communication.

3. Réseau de communication (100) selon la revendication précédente comprenant au moins un deuxième serveur de gestion et un troisième serveur de gestion, le deuxième serveur de gestion gérant le deuxième groupe de communication, le troisième serveur de gestion gérant le troisième groupe de communication, le premier serveur de gestion étant configuré pour propager le paramètre géographique du document de groupe au deuxième serveur de gestion et au troisième serveur de gestion lorsque le paramètre géographique est modifié, lorsque le paramètre géographique est mis en place et/ou lorsque le premier groupe de communication est créé par un regroupement du deuxième groupe de communication et du troisième groupe de communication.

4. Réseau de communication (100) selon l'une des revendications précédentes dans lequel le serveur de gestion du premier groupe de communication est en outre configuré pour :
- déterminer qu'au moins un premier dispositif utilisateur parmi la pluralité de dispositifs utilisateurs est entré dans la zone géographique définie par le paramètre géographique,
- initier l'affiliation du premier dispositif utilisateur au premier groupe de communication.

5. Réseau de communication (100) selon l'une des revendications précédentes dans lequel le serveur de gestion du premier groupe de communication est en outre configuré pour recevoir, de chaque dispositif utilisateur de la pluralité de dispositifs utilisateurs, la position du dispositif utilisateur périodiquement et dans lequel le serveur de gestion du premier groupe de communication utilise la position du dispositif utilisateur reçue pour déterminer si le dispositif utilisateur est entré dans la zone géographique définie par le paramètre géographique.

6. Réseau de communication (100) selon la revendication précédente dans lequel chaque dispositif utilisateur de la pluralité de dispositifs utilisateurs comprend un module de positionnement et est configuré pour, périodiquement :
- déterminer sa position en utilisant son module de positionnement,
- transmettre sa position au serveur de gestion du premier groupe de communication.

7. Réseau de communication (100) selon l'une quelconque des revendications précédentes dans lequel le paramètre géographique du document de groupe du premier groupe de communication est défini par configuration du réseau de communication (100).

8. Réseau de communication (100) selon l'une quelconque des revendications précédentes dans lequel le paramètre géographique du document de groupe du premier groupe de communication est mis à jour dynamiquement suite à l'émission d'une alerte par au moins un dispositif utilisateur à destination du serveur de gestion du premier groupe de communication, la zone géographique définie par le paramètre géographique étant alors centrée au niveau du dispositif utilisateur ayant émis l'alerte, l'alerte émise comprenant la position du dispositif utilisateur.

9. Réseau de communication (100) selon l'une quelconque des revendications précédentes dans lequel la zone géographique définie par le paramètre géographique est polygonale ou ellipsoïdale.
